# EUROPÄISCHE PATENTANMELDUNG

(11) **EP 0 703 276 A2**
(43) Veröffentlichungstag der Anmeldung: **27.03.1996**
(21) Anmeldenummer: 95114197.7
(22) Anmeldetag: 11.09.1995
(51) Int. Cl.: C08L 59/00

(54) **Gegen Zink- und/oder Kupferionen stabilisiertes Polyoxymethylen**

(30) Priorität: 21.09.1994 DE 4433667
(71) Anmelder: Degussa Aktiengesellschaft, D-60311 Frankfurt (DE)
(72) Erfinder: Nun, Edwin, Dr., D-63636 Brachttal (DE); Schauhoff, Stephanie, Dr., D-60385 Frankfurt (DE); Dorn, Klaus, Dr., D-63457 Hanau (DE)

(57) **Zusammenfassung**

2.1. Polyoxymethylen wird bei Kontakt mit Zink- und/oder Kupferionen stark geschädigt.

2.2. Polyoxymethylen enthaltend
- A: mindestens ein Polyoxymethylen
- B: wenigstens 0,05 Gew.-Teile, bezogen auf 100 Gew.-Teile A, einer wäßrigen anionischen Polyurethandispersion,
- C: 0,05 bis 3 Gew.-Teile, bezogen auf 100 Gew.-Teile A, mindestens eines phenolischen Antioxidans, sowie
- D: 0 bis 10 Gew.-Teile, bezogen auf 100 Gew.-Teile A, Ruß oder anderer Farbstoffe,
- E: 0 bis 50 Gew.-Teile, bezogen auf 100 Gew.-Teile A, Füllstoffe,
- F: übliche Zusätze,
weist eine verbesserte Stabilität gegen Zink- und/oder Kupferionen auf.

2.3. Buntmetallkorrosionsbeständige Polyoxymethylen-Teile.

## Beschreibung

Die Erfindung betrifft Polyoxymethylen mit verbesserter Stabilität gegen Zink- und/oder Kupferionen, Formkörper hieraus, Verfahren zur Herstellung von Polyoxymethylen mit verbesserter Stabilität gegen Zink- und/oder Kupferionen sowie die Verwendung von Polyoxymethylen in Kontakt mit korrosiven Medien, die beispielsweise Zink- und/oder Kupferionen aufweisen.

Polyoxymethylen (Polyacetal) ist ein ausgezeichneter Werkstoff, aus dem sich insbesondere durch Spritzguß die unterschiedlichsten Gebrauchsgegenstände herstellen lassen. Von Vorteil ist dabei insbesondere die chemische Resistenz gegen viele organische Lösungsmittel sowie Basen. Seit der Markteinführung der Polyacetale wurden vielfältig Versuche unternommen, die Eigenschaften von Polyoxymethylen (POM) gezielt zu verbessern. So werden beispielsweise zur Verminderung der aus der chemischen Struktur resultierenden Säurelabilität, die auf instabilen Halbacetal-Endgruppen des Polyoxymethylen beruht, die Endgruppen des Polymers durch Veresterung oder Veretherung geschützt (H. Cherdron, L. Hör, W. Kern, Makromol. Chem., 52, 48ff (1962)). Weiterhin ist es bekannt, zur Verbesserung der Schlagzähigkeit des POM thermoplastische Polyurethane zuzusetzen. Polyurethane können aber auch in höhreren Gehalten säurestabilisierend wirken (DE-PS 11 93 240).

Allgemein führt ein Zusatz von thermoplastischen Polyurethanen zu Polyoxymethylen zu schlagzähem Polyoxymethylen, wie es beispielsweise in der EP 0 116 456 B1 beschrieben ist.

Aus der DE-OS 37 03 232 sind ebenfalls POM/TPU-Formmassen bekannt, in denen Polyoxymethylen 5,3 bis 150 Teile eines thermoplastischen Polyurethans aufweist, und ggf. 0,1 bis 5 Teile, bezogen auf die Gesamtmenge POM + TPU, Erdalkalisalze von aliphatischen, vorzugsweise hydroxylgruppenhaltigen aliphatischen ein- bis dreibasigen Carbonsäuren mit 2 bis 20 C-Atomen.

Trotz vielfältigster Versuche gelang es allerdings bisher in keinem Falle, die starke Schädigung des Polyoxymethylen bei Kontakt mit Zink- und/oder Kupferionen (also die sogenannte Buntmetallkorrosion) deutlich zu verringern. Bekanntermaßen wird POM bei Kontakt zu Zink- und/oder Kupferionen stark geschädigt. So verlieren beispielsweise Normkleinstäbe aus Polyoxymethylen, die in auf pH 5,0 gepufferter, am Rückfluß kochender, 0,12 molarer Zinkchloridlösung lagern, innerhalb von wenigen Tagen deutlich an mechanischer Belastbarkeit. Im Schlagzähigkeitsversuch erfolgt bei solchermaßen korrodierten Normkleinstäben vor Ablauf von zwei Wochen ohne Ausnahme Bruch.

Diverse Zusätze, wie beispielsweise Antioxidantien, Oxalat, Polyethylenglykol oder thermoplastische Polyurethane, können die Buntmetallkorrosion, bezogen auf die vorgenannten Versuchsbedingungen, lediglich geringfügig verzögern. So ist beispielsweise die Stabilität der schlagzähen Polyoxymethylene, wie sie aus der EP 0 116 456 B1 bekannt sind, gegen Zink- und/oder Kupferionen im Vergleich zu Polyoxymethylenen, die frei an thermoplastischen Polyurethanen sind, nur geringfügig verbessert und im allgemeinen immer noch ungenügend.

Angesichts der dargelegten Nachteile der aus dem Stand der Technik bekannten Polyoxymethylene ist es Aufgabe der vorliegenden Erfindung ein Polyoxymethylen, daraus hergestellte Formkörper bzw. ein Herstellungsverfahren für ein Polyoxymethylen, anzugeben, das gegenüber Zink- und/oder Kupferionen stabilisiert ist. Außerdem soll das Polyoxymethylen möglichst weitgehend seine ursprünglichen physikalischen Eigenschaften, wie z. B. Steifigkeit, Zähigkeit, Farbe, beibehalten.

Gelöst wird diese Aufgabe hinsichtlich des Polyoxymethylens mit einer Zusammensetzung gemäß Anspruch 1.

Erfindungsgemäß wurde festgestellt, daß wässrige anionische Polyurethandispersionen schon in geringen Mengen geeignet sind, die Stabilität von POM gegen Buntmetallkorrosion außerordentlich vorteilhaft zu beeinflussen. Wäßrige anionische Polyurethandispersionen können dabei auch mit üblichen weiteren, mit Polyoxymethylen vermischbaren, Komponenten kombiniert werden.

Die erfindungsgemäß erhaltenen Polyoxymethylenmischungen mit verbesserter Buntmetallkorrosion sind besonders geeignet für Einsatzzwecke, bei denen die Produkte zumindest zeitweise Zink- und/oder Kupferionen ausgesetzt sind, insbesondere für Teile von oder komplette Bewässerungsanlagen mit Düngemittelausbringung, Dosierbehälter jeglicher Art, z. B. in Spülmaschinen, Produkte zur Aufbewahrung oder Förderung von buntmetallionenhaltigem Wasser, Teile für den Sanitärbereich usw.

Die erfindungsgemäßen Polyoxmethylene mit verbesserter Buntmetallkorrosion enthalten
- A: mindestens ein Polyoxymethylen
- B: wenigstens 0,05 Gew.-Teile, bezogen auf 100 Gew.-Teile A, mindestens einer wäßrigen anionischen Polyurethandispersion,
- C: 0,05 bis 3 Gew.-Teile, bezogen auf 100 Gew.-Teile A, mindestens eines phenolischen Antioxidans, sowie
- D: 0 bis 10 Gew.-Teile, bezogen auf 100 Gew.-Teile A, Ruß oder anderer Farbstoffe,
- E: 0 bis 50 Gew.-Teile, bezogen auf 100 Gew.-Teile A, Füllstoff,
- F: übliche Zusätze.

Dabei werden im Rahmen der Erfindung unter den erfindungsgemäßen Polyoxymethylenen solche Massen verstanden, die durch Abmischen der Komponenten A bis C und ggf. D bis F nach dem Fachmann allgemein bekannten Methoden erhältlich sind, während ein Bestandteil der Massen die Komponente A ist, die durch ein oder mehrere Polyoxymethylene ausgebildet wird.

Die einen Hauptbestandteil A der erfindungsgemäßen Formmassen bildenden Polyoxymethylene können Homopolymere des Formaldehyds oder des Trioxans sein oder Copolymere des Trioxans. Sie können eine lineare Struktur aufweisen, aber auch verzweigt oder vernetzt sein. Sie können einzeln oder als Gemisch eingesetzt werden.

Unter Homopolymeren des Formaldehyds oder des Trioxans werden dabei solche Polymere verstanden, deren halbacetalische Hydroxylendgruppen chemisch, beispielsweise durch Veresterung oder Veretherung, gegen Abbau stabilisiert sind. Unter Copolymeren des Trioxans werden Copolymere aus Trioxan und mindestens einer mit Trioxan copolymerisierbaren Verbindung verstanden.

Solche mit Trioxan copolymerisierbare Verbindungen sind beispielsweise cyclische Ether mit 3 bis 5, vorzugsweise 3 Ringgliedern, von Trioxan verschiedene cyclische Acetale, insbesondere Formale, mit 5 bis 11, vorzugsweise 5 bis 8 Ringgliedern, und lineare Polyacetale, insbesondere Polyformale. Die genannten Cokomponenten werden jeweils in Mengen von 0,01 bis 20, vorzugsweise 0,1 bis 10, insbesondere 1 bis 5 Gew.-%, eingesetzt.

Als Comonomere sind insbesondere Verbindungen der Formel 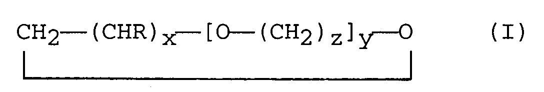
geeignet, in der R ein Wasserstoffatom, einen Alkylrest mit 1 bis 6, vorzugsweise 1, 2 oder 3 Kohlenstoffatomen, der mit 1, 2 oder 3 Halogenatomen, vorzugsweise Chloratomen, substituiert sein kann, einen Alkoxymethylrest mit 2 bis 6, vorzugsweise 2, 3 oder 4 Kohlenstoffatomen, einen Phenylrest oder einen Phenoxymethylrest bedeutet, x eine ganze Zahl von 1 bis 3, wobei y gleich Null ist, y eine ganze Zahl von 1 bis 3, wobei x gleich Null und z gleich 2 ist, und z eine ganze Zahl von 3 bis 6, vorzugsweise 3 oder 4, darstellt, wobei x gleich Null und y gleich 1 ist.

Als cyclische Ether eignen sich vor allem Epoxide, z. B. Ethylenoxid, Styroloxid, Propylenoxid oder Epichlorhydrin, sowie Glycidylether von ein- oder mehrwertigen Alkoholen oder Phenolen.

Als cyclische Acetale eignen sich vor allem cyclische Formale von aliphatischen oder cycloaliphatischen α,ω-Diolen mit 2 bis 8, vorzugsweise 2, 3 oder 4 Kohlenstoffatomen, deren Kohlenstoffkette in Abständen von 2 Kohlenstoffatomen durch ein Sauerstoffatom unterbrochen sein kann, z. B.:
Glykolformal (1,3-Dioxolan),
Propandiolformal (1,3-Dioxan)
Butandiolformal (1,3-Dioxepan) und
Diglykolformal (1,3,6-Trioxocan) sowie
4-Chlormethyl-1,3-dioxolan,
Hexandiolformal (1,3-Dioxonan) und
Butendiolformal (1,3-Dioxacyclohepten-5).

Geeignet sind aber auch, insbesondere für die Herstellung von Terpolymeren des Trioxans, Diformale, z. B. Diglycerindiformal.

Als lineare Polyacetale eignen sich sowohl Homo- oder Copolymere der vorstehend definierten cyclischen Acetale als auch lineare Kondensate aus aliphatischen oder cycloaliphatischen α,ω-Diolen mit aliphatischen Aldehyden oder Thioaldehyden, vorzugsweise Formaldehyd. Insbesondere werden Homopolymere cyclischer Formale von aliphatischen α,ω-Diolen mit 2 bis 8, vorzugsweise 2,3 oder 4 Kohlenstoffatomen verwendet, z. B. Poly-(1,3-dioxolan), Poly-(1,3-dioxan) und Poly-(1,3-dioxepan).

Die Werte für die Viskositätszahl der erfindungsgemäß eingesetzten Polyoxymethylene (gemessen an einer Lösung des Polymeren in Hexafluorisopropanol, das mit methanolischer Natronlauge auf pH 8 bis 9 eingestellt ist, bei 25°C in einer Konzentration von 0,3 g/100 ml) sollen im allgemeinen mindestens 160 (ml/g) betragen. Die Kristallitschmelzpunkte der Polyoxymethylene liegen im Bereich von 140 bis 180°C, vorzugsweise 150 bis 170°C, ihre Dichten betragen 1,38 bis 1,45 g x ml⁻¹, vorzugsweise 1,40 bis 1,43 g x ml⁻¹ (gemessen nach DIN 53 479).

Die erfindungsgemäß verwendeten, vorzugsweise binären oder ternären Trioxan-Copolymeren werden in bekannter Weise durch Polymerisieren der Monomeren in Gegenwart kationisch wirksamer Katalysatoren bei Temperaturen zwischen 0 und 150° C, vorzugsweise zwischen 70 und 140°C, hergestellt (vgl. z. B. DE-AS 14 20 283). Als Katalysatoren werden hierbei beispielsweise Lewissäuren, wie Bortrifluorid oder Antimonpentafluorid, und Komplexverbindungen von solchen Lewissäuren, vorzugsweise Etherate, z. B. Bortrifluoriddiethyletherat oder Bortrifluorid-di-tert.-butyletherat, verwendet. Ferner sind geeignet Protonensäuren, z. B. Perchlorsäure, sowie salzartige Verbindungen, z. B. Triphenylmethylhexafluorophosphat oder Triethyloxoniumtetrafluoroborat, Acetylperchlorat oder Ester der Perchlorsäure, z. B. Methoxymethylperchlorat oder tert.-Butylperchlorat. Zur Regelung des Molekulargewichts können alle Substanzen verwendet werden, von denen bekannt ist, daß sie bei der Polymerisation von Trioxan als Kettenüberträger wirken. Die Polymerisation kann in Masse, Suspension oder Lösung erfolgen. Zur Entfernung instabiler Anteile können die Copolymeren einem thermischen oder hydrolytischen kontrollierten, partiellen Abbau bis zu primären Alkoholendgruppen unterworfen werden (vgl. z. B. DE-AS 14 45 273 und 14 45 294).

Die erfindungsgemäß verwendeten Homopolymeren des Formaldehyds oder des Trioxans werden ebenfalls in bekannter Weise durch katalytisches Polymerisieren des Monomeren hergestellt (vgl. z. B. DE-AS 10 37 705 und 11 37 215).

Die in den erfindungsgemäßen Formmassen als Komponente B enthaltenen anionischen aliphatischen Polyurethandispersionen bestehen aus wäßrigen Dispersionen mit einem Feststoffanteil zwischen 20 und 60 Gew.-%. Die Dispersionen können einen Emulgator enthalten, sie können aber auch emulgatorfrei sein. Die Art des Kations ist für die vorliegende Erfindung unerheblich, ebenso, ob die Dispersion Carboxylat- oder Sulfonatgruppen enthält. Bei den dispergierten Polymeren kann es sich um Polyesterpolyurethane oder um Polyesteretherpolyurethane handeln. Derlei Dispersionen werden beispielsweise in der DE 38 36 030 A1, DE 34 15 920 A1, JP 60004515 und EP 54 766 A1 beschrieben.

Derartige wäßrige anionische Polyurethandispersionen wurden bislang aufgrund ihrer besonderen Eigenschaften (u. a. hervorragende Hydrolysebeständigkeit, Vernetzbarkeit, mechanische Verschäumbarkeit, hohe Lichtechtheit und hohe Elastizität) vorwiegend zur Herstellung von Textilbeschichtungen verwendet, die u. a. für Oberbekleidung, Täschnerwaren, Arbeisschutzbekleidung, Schuhobermaterial oder technische Artikel Verwendung fanden (J. Text. Inst., 71 (3), S. 121 - 28, 1980). Des weiteren wurde auch schon beschrieben (DE 34 40 534), daß sich die Polyurethandispersionen als Beschichtungsmasse für verschiedene polymere Formmassen, u. a. auch Polyoxymethylen, eignen. Auch gemäß der DE 34 40 534 handelt es sich allerdings um eine Oberflächenbehandlung und nicht um einen Bestandteil einer Formmasse.

In Wasser lösliche oder dispergierbare Polyurethane, ein Verfahren zu ihrer Herstellung und Verwendung zur Beschichtung beliebiger Substrate ist in der EP 0 269 972 B1 beschrieben.

Für die Erfindung mit besonderem Erfolg verwendbar sind u. a. die von der Firma BASF unter der Bezeichnung Astacin® vertriebenen Hilfsmittel für die Lederzurichtung (Typen: Grund PI, Grund UH, TOP UT, Finish PUD, Finish PUM, Finish UL) und die von der Firma Bayer angebotenen Dispersionen für die Textilbeschichtung, welche beispielsweise unter den Bezeichnungen Bayderm® Finish 85 UD, IMPRANIL® DLV Dispersion oder IMPRANIL® DLN Dispersion W 50 im Handel erhältlich sind.

Überraschenderweise hat sich nun im Rahmen der Erfindung herausgestellt, daß bereits geringe Anteile von wenigstens 0,05 Teilen, bezogen auf die Hauptmenge Polyoxymethylen, an wäßrigen anionischen Polyurethandispersionen eine hervorragende Verbesserung der Stabilität des Polyoxymethylens gegen Zink- und/oder Kupferionen bewirken.

Grundsätzlich ist die Menge an wäßriger anionischer Polyurethandispersion, die dem Polyoxymethylen zugegeben werden kann, nach oben nicht beschränkt. Es ist jedoch bevorzugt, daß das Polyoxymethylen nur bis zu 10 Gew.-Teile der wäßrigen anionischen Polyurethandispersion, bezogen auf 100 Gew.-Teile A, enthält, da bei deutlich größeren Gehalten, keine, im Verhältnis zum steigenden Anteil der wäßrigen anionischen Polyurethandispersionsmenge stehende, Verbesserung der Buntmetallkorrosionsstabilität des Polyoxymethylen erhalten werden kann. Durch die Art der Homogenisierung der erfindungsgemäßen Formmassen wird insbesondere sichergestellt, daß das Polyoxymethylen nicht durch Polyurethan beschichtet ist, sondern daß das Polyurethan in Polyoxymethylen in Form diskreter Teilchen vorliegt. Diese liegen in Form kleiner Kügelchen gleichmäßig verteilt in der Matrix aus Polyoxymethylen vor.

Zum Schutz gegen die schädliche Einwirkung von Luftsauerstoff, insbesondere bei erhöhten Temperaturen, müssen die erfindungsgemäßen Formmassen ferner als Komponente C 0,05 bis 3 Gew.-Teile, bezogen auf 100 Gew.-Teile des Polyoxymethylens, mindestens eines phenolischen Antioxidans enthalten. Bevorzugt sind insbesondere solche mit 2 bis 6 Hydroxyphenylresten im Molekül, wie sie z. B. in der DE-PS 25 40 207 beschrieben sind. Ohne phenolisches Antioxidans ist Polyoxymethylen in Formmassen nicht verarbeitbar und somit auch nicht extrudierbar.

Die erfindungsgemäßen Polyoxymethylene können ferner als fakultative Komponente D bis 10 Gew.-Teile, bezogen auf 100 Gew.-Teile Polyoxymethylen, Ruß oder anderer Farbstoffe enthalten. Der Ruß kann dabei als Pulver, in geperlter Form oder als Konzentrat, vorzugsweise in einem Polyoxymethylen als Matrix, beigemischt werden. Neben seiner färbenden Wirkung verhindert der Ruß außerdem die Alterung der Polyoxymethylen-Formmassen. Die Alterung von Polyoxymethylen-Formmassen wird durch Licht, insbesondere durch die zur Erde gelangenden UV-Anteile des Sonnenlichts, beschleunigt. Als Gegenmaßnahme kann das Eindringen des Lichts verringert, oder besser noch, verhindert werden. Ruße wirken, abhängig von Konzentration und BET-Oberfläche, oft zusammen mit organischen UV-Absorbern als UV-Stabilisatoren für Polyoxymethylene.

Falls als Komponente D lediglich Ruß Verwendung findet, ist es besonders bevorzugt, daß bis zu 6 Gew.-Teilen, bezogen auf 100 Gew.-Teile A, an Ruß in der erfindungsgemäßen Formmasse enthalten sind. Bis zu 6 Gew.-Teile Ruß sind für die bekannten Polyoxymethylen-Formmassen ausreichend.

Zur Abrundung und Verbesserung bestimmter mechanischer Eigenschaften können die erindungsgemäßen Polyoxymethylene bis 50 Gew.-Teile, bevorzugt bis 30 Gew.-Teile, bezogen auf 100 Gew.-Teile A, Füllstoffe enthalten. Hierzu gehören besonders vorteilhaft Glasfasern, wie sie beispielsweise in der DE 25 33 087 und der JP 86236851 beschrieben werden; Glaskugeln, wie sie aus der EP 0 273 657 bekannt sind; Whisker, wie sie die JP 86060718 zur Verfügung stellt; Kreide gemäß EP 0 192 356; Wollastonit, bekannt aus der EP 0 301 407; oder Kohlenstoffasern nach der JP 91275764.

Die genannten Füllstoffe können entweder alleine oder in Mischung von mehreren in der erfindungsgemäßen Formmasse enthalten sein.

Schließlich können die erfindungsgemäßen Formmassen weitere in Polyoxymethylen-Formmassen übliche Zusätze enthalten. Hierbei werden bevorzugt UV-Absorber, Wärmestabilisatoren, Brandschutzmittel und/oder Säureschutzmittel in Mengen bis zu 3 Gew.-Teilen, bezogen auf 100 Gew.-Teile des Polyoxymethylens, eingesetzt. Beispiele für derartige übliche Zusätze sind an sich bekannte Wärmestabilisatoren, z. B. Kondensationsprodukte von Carbonsäureamiden, wie Oxalsäure-, Malonsäure-, Isophthalsäure-, Terephthalsäurediamid und Trimesinsäuretriamid, schwerflüchtige S-Triazinderivate, wie Melam, Melem und Melon, Kondensationsprodukte aus Melamin und Formaldehyd, und UV-Absorber und Lichtschutzmittel, z. B. 2-(2'-Hydroxyphenyl)-benzotriazole, 2,4-Bis-(2'-Hydroxyphenyl)-6-alkyl-S-triazine, 4-Hydroxybenzophenone, 1,3-Bis-(2'-Hydroxybenzoyl)-benzol-derivate und Oxalsäurediamide, wie Oxalsäuredianelid.

Wie bereits erwähnt, kann das gegen Buntmetallkorrosion stabilisierte Polyoxymethylen überall dort eingesetzt werden, wo ein direkter Kontakt zu Zink-, Kupfer- oder Messingteilen besteht. Derartige Anwendungen finden sich insbesondere im Heizungs- und Sanitärbereich, aber auch im Kfz-Bereich und bei Geräten zur Ausbringung von Düngemitteln. Zur Bewertung der Stabilisierung der verwendeten Komponenten B im erfindungsgemäßen Polyoxymethylen wurde ein sogenannter Buntmetallkorrosionstest verwendet. Hierfür wurden zunächst Normkleinstäbe aus Polyoxymethylen hergestellt, wobei rohes Polyoxymethylen auf einer ZSK 28 (Zwei-Schnecken-Koextruder) unter üblichen Bedingungen mit Zuschlagstoffen extrudiert wird. Die aus dem Extruder austretenden Stränge werden zur Kühlung durch kaltes Wasser geleitet und anschließend granuliert. Aus den getrockneten Granulaten werden bei 190°C Preßplatten der Größe 15,8 cm x 15,8 cm x 0,2 cm gepreßt, aus denen Probekörper hergestellt werden, die Normkleinstäben gemäß DIN 16 781 Teil 2 entsprechen. Im Buntmetallkorrosionstest werden die erhaltenen Normkleinstäbe in einer auf einen pH-Wert von 5 gepufferten 0,12 molaren Zinkchloridlösung bei 100°C am Rückfluß gekocht. Die Pufferlösung zur Einstellung auf den pH-Wert 5,0 besteht dabei je 100 ml aus 67,8 ml einer 0,1 normalen Essigsäure und aus 32,2 ml einer 0,1 normalen Natriumacetatlösung. Die Normkleinstäbe werden in dieser Lösung gelagert, und zwar dergestalt, daß sie vollständig mit der Zinkchloridlösung bedeckt sind. Im Abstand von jeweils 24 h werden jeweils 10 der Normkleinstäbe entnommen, und die entnommenen Probekörper werden dann mit vollentsalztem Wasser gewaschen und bei Raumtemperatur an der Luft getrocknet. Die gewaschenen und getrockneten Normkleinstäbe werden anschließend auf Schlagzähigkeit analog zu DIN 53 453 untersucht. Brechen im Schlagzähigkeitsversuch von den 10 entnommenen Normkleinstäben weniger als 3, so werden 24 h nach der vorherigen Entnahme erneut 10 Normkleinstäbe entnommen, wiederum gewaschen und getrocknet und auf Schlagzähigkeit untersucht. Dieses Verfahren wird so lange wiederholt, bis im Schlagzähigkeitsversuch wenigstens 3 Normkleinstäbe brechen. Dies wird dann als ein Versagen der mechanischen Belastbarkeit angesehen. Die Zeiten, in Tagen gemessen, nach denen wenigstens 3 Normkleinstäbe brechen, werden miteinander verglichen.

Vorteilhaft und bevorzugt sind die erfindungsgemäßen Polyoxymethylenmischungen im Buntmetallkorrosionstest länger als 20 Tage beständig, besonders vorteilhaft länger als 25 Tage und ganz besonders vorteilhaft länger als 30 Tage, wobei der Buntmetallkorrosionstest wie vorerwähnt folgende Schritte aufweist:
a) Lagern von Probekörpern bei 100°C in einer auf pH 5 gepufferten 0,12 m Zinkchloridlösung;
b) Entnahme von jeweils 10 Probekörpern in 24stündigen Abständen, Waschen derselben mit voll entsalztem Wasser und Trocknen bei Raumtemperatur an der Luft;
c) Bestimmen der Schlagzähigkeit der Probekörper analog DIN 53 453;
d) Feststellen der Lagerzeit, nach der in der Schlagzähigkeitsprüfung wenigstens 3 Probekörper brechen.

Die erfindungsgemäßen Formmassen werden durch Mischen der zweckmäßigerweise überwiegend in Pulver- oder Granulatform vorliegenden Komponenten und anschließendes Homogenisieren hergestellt. Die Komponente B sowie ggf. weitere Komponenten werden jedoch in dispergierter Form bzw. die weiteren Komponenten in Lösung zugesetzt, entweder in der Misch- oder erst in der Homogenisierungsvorrichtung.

Das Mischen erfolgt üblicherweise bei Raumtemperatur, vorzugsweise bei einer Temperatur von 15 bis 30°C, und das Homogenisieren erfolgt in beliebigen heizbaren Mischwerken, z. B. Walzen, Kalandern, Knetern oder Extrudern, bei einer Temperatur oberhalb des Kristallschmelzpunktes des Polyoxymethylens, d. h. bei einer Temperatur von 150 bis 260° C, vorzugsweise 170 bis 220°C.

Die Polyoxymethylenmischungen gemäß der Erfindung werden bevorzugt zu Formkörpern verarbeitet, u. a. vorteilhaft im Spritzgußverfahren, wobei die Spritzgußformteile wenigstens ein Polyoxymethylen sowie 0,1 bis 10 Gew.-Teile, bezogen auf 100 Gew.-Teile des Polyoxymethylens, einer wäßrigen anionischen Polyurethandisperion enthalten.

Die Erfindung betrifft auch ein Verfahren zur Herstellung eines Polyoxymethylens mit verbesserter Stabilität gegen Zink- und/oder Kupferionen, bei dem
- A: 100 Gew.-Teile wenigstens eines Polyoxymethylens mit
- B: 0,1 bis 10 Gew.-Teile einer wäßrigen, anionischen Polyurethandispersion, wobei die Polyurethandispersion sowohl Polyesterpolyurethane als auch Polyesteretherpolyurethane, mit oder ohne Emulgatoren, mit Carboxylat- oder Sulfonatgruppen mit gleichen oder verschiedenen Gegenionen, sein können,
- C: 0,05 bis 3 Gew.-Teile wenigstens eines phenolischen Antioxidans, sowie
- D: 0 bis 10 Gew.-Teile Ruß oder andere Farbstoffe,
- E: 0 bis 50 Gew.-Teile Füllstoffe und
- F: bis 3 Gew.-Teilen an weiteren in Polyoxymethylen-Formmassen üblichen Zuschlägen
vermischt und ggf. zu Formteilen gepreßt oder spritzgegossen werden.

Die Buntmetallkorrosionsbeständigkeit der so hergestellten Produkte kann wie oben beschrieben bestimmt werden.

Die Erfindung betrifft auch die Verwendung von
0,1 bis 10 Gew.-Teilen einer wäßrigen, anionischen Polyurethandispersion (B) und
0,05 bis 3 Gew.-Teilen mindestens eines phenolischen Antioxidans (C),
0 bis 10 Gew.-Teilen Ruß oder anderer Farbstoffe (D),
0 bis 50 Gew.-Teilen Füllstoffen (E) und
ggf. üblichen Zusätze (F)
auf 100 Gew.-Teile wenigstens eines Polyoxymethylens (A) zur Verbesserung der Stabilität gegen Zink- und/oder Kupferionen.

Auch beim Verfahren und der Verwendung gelten die o. g. besonderen Bereiche für die zugegebenen Komponenten. Insbesondere unterliegen die bereits genannten wäßrigen anionischen Polyurethandispersionen keinen weiteren Beschränkungen.

Die Erfindung wird in den nachfolgenden Beispielen näher beschrieben.

### Beschreibung der Einsatzstoffe

### Eingesetzte Materialien

### Polyoxymethylen (POM):

Copolymeres aus Trioxan mit 1,3-Dioxacycloheptan mit ca. 2,5 % Comonomeranteil, bereits stabilisiert mit ca. 0,3 % Triethylenglykol-bis-(3-tert.butyl-5-methyl-4-hydroxyphenyl)-propionat als Antioxidans und feinteiligem, vernetzten Melamin-Formaldehyd-Kondensat.
MFI: 8 - 10 g/10 Minuten.

### Polyurethandispersion 1 (PU-Disp 1):

Anionische aliphatische Polyesteretherpolyurethan-Dispersion, ca. 40%ig in Wasser, pH-Wert 6,5 - 7,5, Viskosität nach DIN 53 211: 15 - 30 s/25°C (Auslaufbecher, Düse 4 mm).

### Polyurethandispersion 2 (PU-Disp 2):

Anionische, aliphatische Polyesterpolyurethandispersion, ca. 50%ig in Wasser, pH-Wert 6,5 - 7,5, Viskosität nach DIN 53 211: 25 - 35 s/20°C (Auslaufbecher, Düse 4 mm).

### Polyurethandispersion 3 (PU-Disp 3):

Emulgatorfreie, anionische, aliphatische Polyesterpolyurethandispersion mit Carboxylatgruppen, ca. 40%ig in Wasser, pH-Wert 6,0 - 8,0, Viskosität nach DIN 53 211: 10 - 30 s/25°C (Auslaufbecher, Düse 4 mm).

### Vergleichsversuch a) und Beispiele 1 - 6

Die Komponenten POM, PU-Disp 1, PU-Disp 2 und PU-Disp 3 wurden in den in Tabelle 1 angegebenen Gewichtsverhältnissen, jeweils bezogen auf POM, vermischt, in einem Zweiwellenextruder vom Typ ZDS-K28 aufgeschmolzen und homogenisiert, und die homogenisierte Mischung wurde granuliert. Aus den Granulaten wurden, wie oben beschrieben, Normkleinstäbe hergestellt und auf die Beständigkeit gegen Zinkionen geprüft. Die Ergebnisse sind in Tabelle 1 zusammengestellt.

**Tabelle 1**

| Vergleichsversuch bzw. Beispiele | PU-Disp 1 (%) | PU-Disp 2 (%) | PU-Disp 3 (%) | Bruch nach Tagen |
|---|---|---|---|---|
| a) | 0 | 0 | 0 | 15 |
| 1 | 1 | 0 | 0 | 24 |
| 2 | 2 | 0 | 0 | >36 |
| 3 | 0 | 1 | 0 | 24 |
| 5 | 0 | 0 | 1 | 27 |
| 6 | 0 | 0 | 2 | >36 |

Weitere Ausführungsformen und Verwendungen der erfindungsgemäßen Polyoxymethylen-Formmassen sowie weitere Ausgestaltungen des erfindungsgemäßen Verfahrens ergeben sich aus den nachfolgenden Patentansprüchen.

## Patentansprüche

1. Polyoxymethylen mit verbesserter Stabilität gegen Zink- und/oder Kupferionen, enthaltend
A mindestens ein Polyoxymethylen
B wenigstens 0,05 Gew.-Teile, bezogen auf 100 Gew.-Teile A, einer wäßrigen anionischen Polyurethandispersion,
C 0,05 bis 3 Gew.-Teile, bezogen auf 100 Gew.-Teile A, mindestens eines phenolischen Antioxidans, sowie
D 0 bis 10 Gew.-Teile, bezogen auf 100 Gew.-Teile A, Ruß oder anderer Farbstoffe,
E 0 bis 50 Gew.-Teile, bezogen auf 100 Gew.-Teile A, Füllstoffe,
F übliche Zusätze.

2. Polyoxymethylen nach Anspruch 1,
**dadurch gekennzeichnet,**
daß es bis 10 Gew.-Teile, bezogen auf 100 Gew.-Teile A, der Komponente B enthält.

3. Polyoxymethylen nach einem der Ansprüche 1 oder 2,
**dadurch gekennzeichnet,**
daß es bis 6 Gew.-Teile, bezogen auf 100 Gew.-Teile A, der Komponente D enthält.

4. Polyoxymethylen nach einem der Ansprüche 1 bis 3,
**dadurch gekennzeichnet,**
daß es bis 30 Gew.-Teile, bezogen auf 100 Gew.-Teile A, Kreide, Glasfasern, Glaskugeln, Wollastonit und/oder Kaliumtitanat-Whisker als Komponente E enthält.

5. Polyoxymethylen nach einem der Ansprüche 1 bis 4,
**dadurch gekennzeichnet,**
daß es UV-Absorber, Wärmestabilisatoren, Brandschutzmittel und/oder Säureschutzmittel als Komponente F enthält.

6. Polyoxymethylen nach einem der vorhergehenden Ansprüche,
**dadurch gekennzeichnet,**
daß es im Buntmetallkorrosionstest länger als 20 Tage beständig ist, wobei der Buntmetallkorrosionstest folgende Schritte aufweist:
a) Lagern von Probekörpern bei 100°C in einer auf pH 5 gepufferten 0,12 m Zinkchloridlösung;
b) Entnahme von jeweils 10 Probekörpern in 24stündigen Abständen, Waschen derselben mit voll entsalztem Wasser und Trocknen bei Raumtemperatur an der Luft;
c) Bestimmen der Schlagzähigkeit der Probekörper analog DIN 53 453;
d) Feststellen der Lagerzeit nach der in der Schlagzähigkeitsprüfung c) wenigstens 3 Probekörper brechen.

7. Formkörper aus einem Polyoxymethylen gemäß einem der vorhergehenden Ansprüche.

8. Spritzgußformteil aufweisend
A wenigstens ein Polyoxymethylen,
B 0,1 bis 10 Gew.-Teile, bezogen auf 100 Gew.-Teile A, einer wäßrigen, anionischen Polyurethandispersion.

9. Verfahren zur Herstellung eines Polyoxymethylens mit verbesserter Stabilität gegen Zink- und/oder Kupferionen,
**dadurch gekennzeichnet,**
daß
A 100 Gew.-Teile wenigstens eines Polyoxymethylens mit
B 0,1 bis 10 Gew.-Teilen einer wäßrigen, anionischen Polyurethandispersion, wobei die Polyurethandispersion sowohl Polyesterpolyurethane als auch Polyesteretherpolyurethane, mit oder ohne Emulgatoren, mit Carboxylat- oder Sulfonatgruppen, mit gleichen oder verschiedenen Gegenionen, sein können,
C 0,05 bis 3 Gew.-Teile wenigstens eines phenolischen Antioxidans, sowie
D 0 bis 10 Gew.-Teile Ruß oder andere Farbstoffe,
E 0 bis 50 Gew.-Teile Füllstoffe und
F bis 3 Gew.-Teile an weiteren in Polyoxymethylen-Formmassen üblichen Zuschlägen
vermischt und ggf. zu Formteilen gepreßt oder spritzgegossen werden.

10. Verfahren nach Anspruch 9,
**dadurch gekennzeichnet,**
daß die Komponenten B und C und ggf. D, E und/oder F in einer solchen Menge zu der Komponente A zugegeben werden, daß ein aus der Formmasse erhältlicher Prüfkörper im Buntmetallkorrosionstest länger als 20 Tage beständig ist, wobei der Buntmetallkorrosionstest folgende Schritte aufweist:
a) Lagern von Probekörpern bei 100°C in einer auf pH 5 gepufferten 0,12 m Zinkchloridlösung;
b) Entnahme von jeweils 10 Probekörpern in 24stündigen Abständen, Waschen derselben mit voll entsalztem Wasser und Trocknen bei Raumtemperatur an der Luft;
c) Bestimmen der Schlagzähigkeit der Probekörper analog DIN 53 453;
d) Feststellen der Lagerzeit nach der in der Schlagzähigkeitsprüfung c) wenigstens 3 der 10 entnommenen Probekörper brechen.

11. Verwendung von
0,1 bis 10 Gew.-Teilen einer wäßrigen, anionischen Polyurethandispersion (B) und 0,05 bis 3 Gew.-Teilen mindestens eines phenolischen Antioxidans (C),
0 bis 10 Gew.-Teilen Ruß oder anderer Farbstoffe (D)
0 bis 50 Gew.-Teilen Füllstoffen (E)
und
ggf. übliche Zusätze (F)
auf 100 Gew.-Teile wenigstens eines Polyoxymethylens (A) zur Verbesserung der Stabilität gegen Zink- und/oder Kupferionen.

12. Verwendung nach Anspruch 11,
**dadurch gekennzeichnet,**
daß die wäßrige anionische Polyurethandispersion B, wobei die Polyurethandispersion sowohl Polyesterpolyurethane als auch Polyesteretherpolyurethane, mit oder ohne Emulgatoren, mit Carboxylat- oder Sulfonatgruppen, mit gleichen oder verschiedenen Gegenionen, sein können, in einer solchen Menge verwendet wird, daß ein Prüfkörper im Buntmetallkorrosionstest länger als 20 Tage beständig ist, wobei der Buntmetallkorrosionstest die folgenden Schritte umfaßt:
a) Lagern von Probekörpern bei 100°C in einer auf pH 5 gepufferten 0,12 m Zinkchloridlösung;
b) Entnahme von jeweils 10 Probekörpern in 24stündigen Abständen, Waschen derselben mit voll entsalztem Wasser und Trocknen bei Raumtemperatur an der Luft;
c) Bestimmen der Schlagzähigkeit der Probekörper analog DIN 53 453;
d) Feststellen der Lagerzeit nach der in der Schlagzähigkeitsprüfung c) wenigstens 3 Probekörper brechen.
